# EUROPEAN PATENT APPLICATION

(11) **EP 3 070 371 A2**
(43) Date of publication of application: **21.09.2016**
(21) Application number: 16158900.7
(22) Date of filing: 07.03.2016
(51) Int. Cl.: F16H 48/38

(54) **METHOD OF ATTACHING RING GEAR TO DIFFERENTIAL CASE, JIG, AND DIFFERENTIAL CASE**

(30) Priority: 17.03.2015 JP 2015053217
(71) Applicant: Toyota Jidosha Kabushiki Kaisha, Toyota-shi, Aichi 471-8571 (JP)
(72) Inventor: ISHIHARA, Hiroaki, Toyota-shi, Aichi 471-8571 (JP)
(74) Representative: TBK

(57) **Abstract**

A method for attaching a ring gear 12 to a differential case 13 includes: a first step of fitting the ring gear 12 onto an outer peripheral side of the differential case 13; and a second step of outwardly deforming a caulk-fixing part 52 of the differential case 13 to prevent the ring gear 12 from being dropped out from the differential case 13. In the second step, a jig 60 having an inclined surface 61 that can contact an inner peripheral surface 53 of the caulk-fixing part 52 of the differential case 13 is pushed along a rotational axis direction of the differential case 13 to outwardly deform the caulk-fixing part 52. The inclined surface 61 of the jig 60 and/or at least a part of the inner peripheral surface 53 of the caulk-fixing part 52 are subjected to a surface treatment to increase a friction between the inclined surface 61 of the jig 60 and the inner peripheral surface 53 of the caulk-fixing part 52.

## Description

### BACKGROUND OF THE INVENTION

### 1. Field of the Invention

The present invention relates to a method for attaching a ring gear to a differential case and a jig and a differential case used for the attachment.

### 2. Description of Related Art

International Patent Publication No. WO 2012/004866 discloses a technique of fitting a ring gear onto an outer peripheral side of a differential case and then outwardly deforming a caulk-fixing part of the differential case to prevent the ring gear from dropping out from the differential case. Specifically, in order to outwardly deform the caulk-fixing part of the differential case, a jig having an inclined surface that can contact an inner peripheral surface of the caulk-fixing part is pushed along an axial direction of the ring gear.

However, when the caulk-fixing part of the differential case is outwardly deformed, tensile stress is generated in the inner peripheral surface of the caulk-fixing part, and due to this tensile stress, cracks may be generated in the inner peripheral surface of the caulk-fixing part.

An object of the present invention is to provide a technique for suppressing tensile stress that is generated in the inner peripheral surface of the caulk-fixing part when the caulk-fixing part of the differential case is outwardly deformed to thereby prevent cracks from occurring in the inner peripheral surface of the caulk-fixing part.

### SUMMARY OF THE INVENTION

According to the present invention, this object is solved by a method having the features of claim 1, a jig having the features of claim 2 and a differential case having the features of claim 3.

A method for attaching a ring gear to a differential case includes: a first step of fitting the ring gear onto an outer peripheral side of the differential case; and a second step of outwardly deforming a caulk-fixing part of the differential case to prevent the ring gear from being dropped out from the differential case, in which: in the second step, a jig having an inclined surface that can contact an inner peripheral surface of the caulk-fixing part of the differential case is pushed along a rotational axis direction of the differential case to outwardly deform the caulk-fixing part, and at least one of the inclined surface of the jig and of at least a part of the inner peripheral surface of the caulk-fixing part is a treated surface subjected to a surface treatment to increase a friction between the inclined surface of the jig and the inner peripheral surface of the caulk-fixing part. That is, in the second step, tensile stress is generated in the inner peripheral surface of the caulk-fixing part due to the outward deformation of the caulk-fixing part. Meanwhile, in the method stated above, when the jig is pushed against the caulk-fixing part, a compressive action is generated in the inner peripheral surface of the caulk-fixing part due to the friction between the inclined surface of the jig and the inner peripheral surface of the caulk-fixing part. This compressive action reduces the tensile stress. Accordingly, it is possible to suppress the tensile stress that is generated in the inner peripheral surface of the caulk-fixing part when the caulk-fixing part is outwardly deformed, whereby it is possible to prevent cracks from occurring in the inner peripheral surface of the caulk-fixing part.

A jig for outwardly deforming a caulk-fixing part of a differential case in order to prevent a ring gear fitted onto an outer peripheral side of the differential case from being dropped out from the differential case includes an inclined surface that can contact an inner peripheral surface of the caulk-fixing part, and the inclined surface is a treated surface subjected to a surface treatment to increase a friction between the inclined surface and the inner peripheral surface of the caulk-fixing part. That is, when the jig is pushed against the caulk-fixing part in the rotational axis direction of the differential case, the caulk-fixing part is outwardly deformed and tensile stress is generated in the inner peripheral surface of the caulk-fixing part due to the outward deformation of the caulk-fixing part. Meanwhile, according to the configuration stated above, when the jig is pushed against the caulk-fixing part, a compressive action is generated in the inner peripheral surface of the caulk-fixing part due to the friction between the inclined surface of the jig and the inner peripheral surface of the caulk-fixing part. This compressive action reduces the tensile stress. Accordingly, it is possible to suppress the tensile stress that is generated in the inner peripheral surface of the caulk-fixing part when the caulk-fixing part is outwardly deformed, whereby it is possible to prevent cracks from occurring in the inner peripheral surface of the caulk-fixing part.

A differential case has a caulk-fixing part to be outwardly deformed so as to prevent a ring gear fitted onto an outer peripheral side of the differential case from being dropped out from the differential case, wherein at least a part of an inner peripheral surface of the caulk-fixing part is a treated surface subjected to a surface treatment to increase a friction. When the jig having the inclined surface that can contact the inner peripheral surface of the caulk-fixing part is pushed against the caulk-fixing part in the rotational axis direction of the differential case in the above configuration, the caulk-fixing part is outwardly deformed and tensile stress is generated in the inner peripheral surface of the caulk-fixing part due to the outward deformation of the caulk-fixing part. Meanwhile, according to the configuration stated above, when the jig is pushed against the caulk-fixing part, a compressive action is generated in the inner peripheral surface of the caulk-fixing part due to the friction between the inclined surface of the jig and the inner peripheral surface of the caulk-fixing part. This compressive action reduces the tensile stress. Accordingly, it is possible to suppress the tensile stress that is generated in the inner peripheral surface of the caulk-fixing part when the caulk-fixing part is outwardly deformed, whereby it is possible to prevent cracks from occurring in the inner peripheral surface of the caulk-fixing part.

According to the present invention, it is possible to suppress the tensile stress that is generated in the inner peripheral surface of the caulk-fixing part when the caulk-fixing part is outwardly deformed to prevent the cracks from occurring in the inner peripheral surface of the caulk-fixing part.

Preferably, the inner peripheral surface of the caulk-fixing part includes a straight inner peripheral part and a tapered inner peripheral part and at least the tapered inner peripheral part is the treated surface. When the inclined surface of the jig comes in contact with the inner peripheral surface of the caulk-fixing part, the contact is mainly made with the tapered inner peripheral part. Hence, due to the treated surface of the tapered inner peripheral part, a strong friction is generated between the inclined surface of the jig and the tapered inner peripheral part. This friction generates the compressive action in the straight inner peripheral part of the caulk-fixing part. Furthermore, when the caulk-fixing part is outwardly deformed, tensile stress is especially in the straight inner peripheral part of the caulk-fixing part. Thus, the compressive action in the straight inner peripheral part is reduced by the compressive action such that it is possible to prevent the cracks from occurring in the straight inner peripheral part of the caulk-fixing part.

Preferably, a plurality of grooves that extend annularly are formed in the treated surface of the jig.

Preferably, a plurality of recesses are formed in the treated surface of the jig.

Preferably, a grid of grooves is formed on the treated surface of the jig.

Preferably, a plurality of grooves that extend annularly are formed in the treated surface of the caulk-fixing part of the differential case.

Preferably, a plurality of recesses are formed in the treated surface of the caulk-fixing part of the differential case.

Preferably, a grid of grooves is formed on the treated surface of the caulk-fixing part of the differential case.

The above and other objects, features and advantages of the present invention will become more fully understood from the detailed description given hereinbelow and the accompanying drawings which are given by way of illustration only, and thus are not to be considered as limiting the present invention.

### BRIEF DESCRIPTION OF THE DRAWINGS

Fig. 1 is a cross-sectional view of a differential (first embodiment);
Fig. 2 is an enlarged view of a main part of Fig. 1 (first embodiment);
Fig. 3 is an enlarged view of a main part of Fig. 2 and shows a state before a caulk-fixing part is deformed (first embodiment);
Fig. 4 is a flowchart for attaching a ring gear to a differential case (first embodiment);
Fig. 5 is a diagram showing a state in which the ring gear is fitted onto an outer peripheral side of the differential case (first embodiment);
Fig. 6 is a diagram showing a state in which the ring gear is fitted onto the outer peripheral side of the differential case (first embodiment);
Fig. 7 is a diagram for describing a problem showing a state in which a caulk-fixing part is outwardly deformed using a jig;
Fig. 8 is a diagram for describing a problem showing a state in which the caulk-fixing part is outwardly deformed using the jig;
Fig. 9 is a diagram showing a state in which the caulk-fixing part is outwardly deformed using the jig (first embodiment);
Fig. 10 is a diagram showing a state in which the caulk-fixing part is outwardly deformed using the jig (first embodiment);
Fig. 11 is a diagram showing a state in which the caulk-fixing part is outwardly deformed using the jig (first embodiment);
Fig. 12 is a diagram showing a state in which the caulk-fixing part is outwardly deformed using the jig (varied example);
Fig. 13 is a diagram showing a state in which the caulk-fixing part is outwardly deformed using the jig (varied example); and
Fig. 14 is a diagram showing a state in which the caulk-fixing part is outwardly deformed using the jig (varied example).

### DESCRIPTION OF THE EXEMPLARY EMBODIMENTS

### (First embodiment)

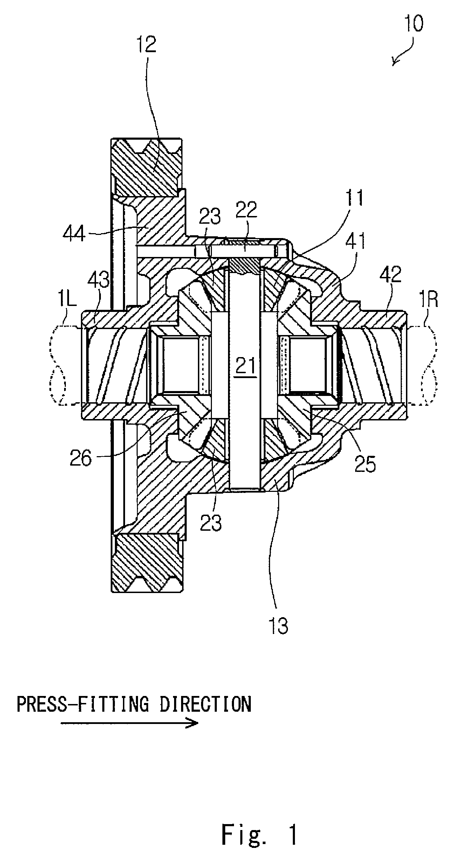

Hereinafter, with reference to Figs. 1 to 11, a first embodiment will be described. As shown in Fig. 1, a differential 10 includes a differential mechanism 11, a differential case 13 that houses the differential mechanism 11, and a ring gear 12 fastened to the differential case 13. This differential 10 transmits a power input to the differential 10 from an engine via the ring gear 12 to right and left drive wheels. Further, this differential 10 allows the right and left drive wheels to be rotated at rotation speeds different from each other by the differential mechanism 11.

The differential mechanism 11 includes a pinion shaft 21, a fixture pin 22, and a pair of pinion gears 23. The pinion shaft 21 is supported by the differential case 13. The fixture pin 22 fixes the pinion shaft 21 to the differential case 13. The pair of pinion gears 23 are rotatably supported by the pinion shaft 21.

Further, the differential mechanism 11 includes a right side gear 25 that is spline-engaged with the tip end part of a right drive shaft 1R and a left side gear 26 that is spline-engaged with the tip end part of a left drive shaft 1L. The right side gear 25 and the left side gear 26 are meshed with the pair of pinion gears 23.

According to the above configuration, when the differential case 13 is rotated due to a rotation of the ring gear 12, the pinion shaft 21 and the pair of pinion gears 23 are rotated, which rotates the right side gear 25 and the left side gear 26. Therefore, the power input to the ring gear 12 is transmitted to the right drive shaft 1R and the left drive shaft 1L via the right side gear 25 and the left side gear 26.

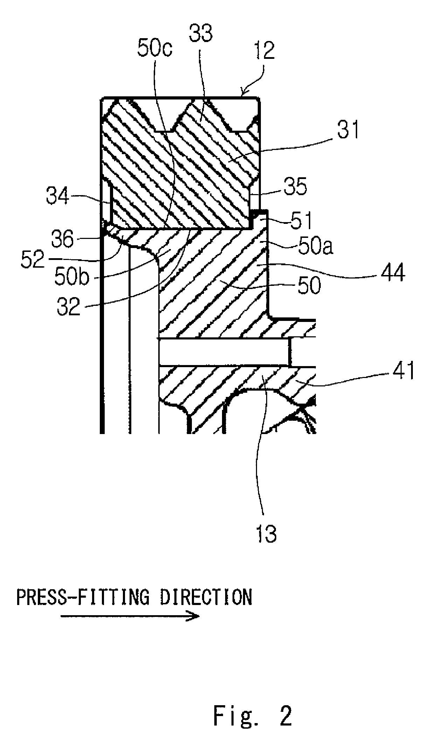

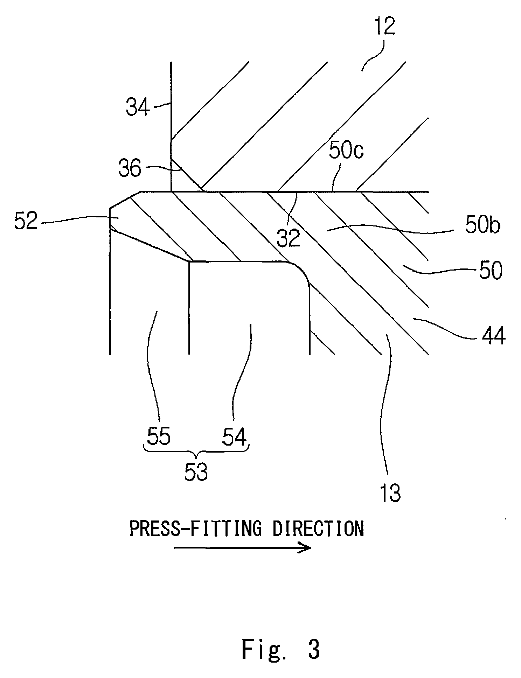

The ring gear 12 includes, as shown in Figs. 2 and 3, a body part 31, a press-fitting surface 32, a teeth part 33, a first side surface 34, a second side surface 35, and an inclined surface 36. The "press-fitting direction" will now be defined. The press-fitting direction is a direction in which the ring gear 12 is press-fitted onto the differential case 13.

The body part 31 is annularly formed. The press-fitting surface 32 is an inner peripheral surface of the body part 31. The teeth part 33 is formed so as to outwardly protrude from the body part 31. In this embodiment, the teeth part 33 is formed into a helical gear shape. The first side surface 34 and the second side surface 35 are perpendicular to the rotational axis direction of the differential case 13 (hereinafter simply referred to as a rotational axis direction). The first side surface 34 is a surface on the side opposite to the second side surface 35. The second side surface 35 faces toward the press-fitting direction. The first side surface 34 faces toward a direction opposite to the press-fitting direction. The inclined surface 36 is annularly formed along the full circumference of a corner part in which the first side surface 34 and the press-fitting surface 32 intersect with each other. The inclined surface 36 is a C surface (Chamfer Surface).

The differential case 13 includes, as shown in Fig. 1, a body 41, a right support boss 42, a left support boss 43, and a flange 44.

The body 41 houses the differential mechanism 11. The right drive shaft 1R is rotatably inserted through the right support boss 42. The left drive shaft 1L is rotatably inserted through the left support boss 43.

The flange 44 includes, as shown in Fig. 2, a flange body 50, a side surface supporting part 51, and a caulk-fixing part 52.

The flange body 50 is annularly formed so as to outwardly project from the body 41. The flange body 50 includes a tip end part 50a of the press-fitting direction of the flange body 50, a base end part 50b of the press-fitting direction of the flange 44, and an outer peripheral surface 50c.

The side surface supporting part 51 is annularly formed so as to outwardly project from the tip end part 50a of the flange body 50. The side surface supporting part 51 supports the second side surface 35 of the ring gear 12.

The caulk-fixing part 52 is annularly formed, as shown in Fig. 3, so as to project in the direction opposite to the press-fitting direction from the base end part 50b of the flange 44. As shown in Fig. 3, the caulk-fixing part 52 includes an inner peripheral surface 53. The inner peripheral surface 53 includes a straight inner peripheral surface 54 and a tapered inner peripheral surface 55. The straight inner peripheral surface 54 and the tapered inner peripheral surface 55 are formed successively in this order along the projecting direction of the caulk-fixing part 52. The straight inner peripheral surface 54 is an inner peripheral surface that extends straight along the rotational axis direction. The tapered inner peripheral surface 55 is an inner peripheral surface that is inclined so as to widen toward the projecting direction of the caulk-fixing part 52. As shown in Fig. 2, by outwardly deforming the caulk-fixing part 52, the caulk-fixing part 52 supports the first side surface 34 and the inclined surface 36 of the ring gear 12. As a result, the ring gear 12 is prevented from dropping out from the differential case 13.

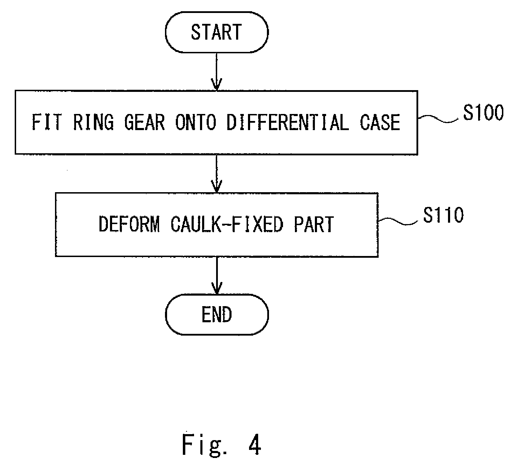

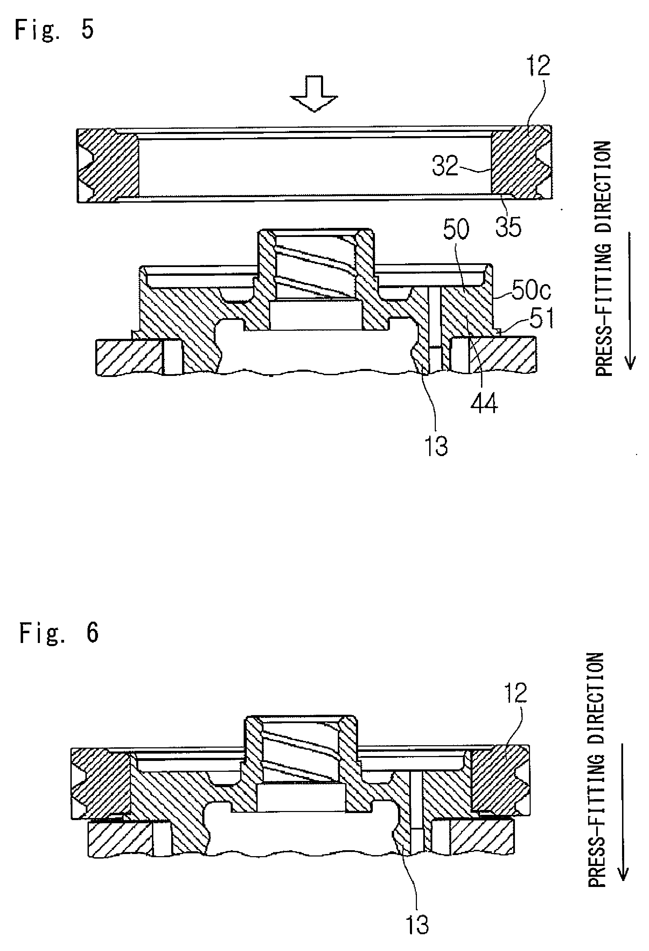

The attachment of the ring gear 12 to the differential case 13 is performed as follows as shown in Figs. 4 to 8. First, as shown in Figs. 5 and 6, the ring gear 12 is fitted onto the outer peripheral side of the differential case 13 (S100). Specifically, the ring gear 12 is fitted onto the outer peripheral side of the differential case 13 so that the outer peripheral surface 50c of the flange body 50 of the flange 44 of the differential case 13 is opposed to the press-fitting surface 32 of the ring gear 12 in the radial direction and the second side surface 35 of the ring gear 12 is opposed to the side surface supporting part 51 of the flange 44 in the rotational axis direction.

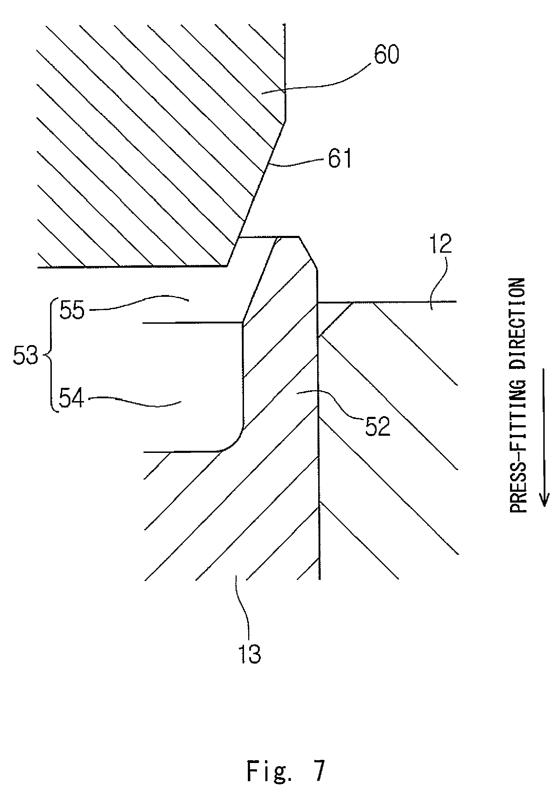

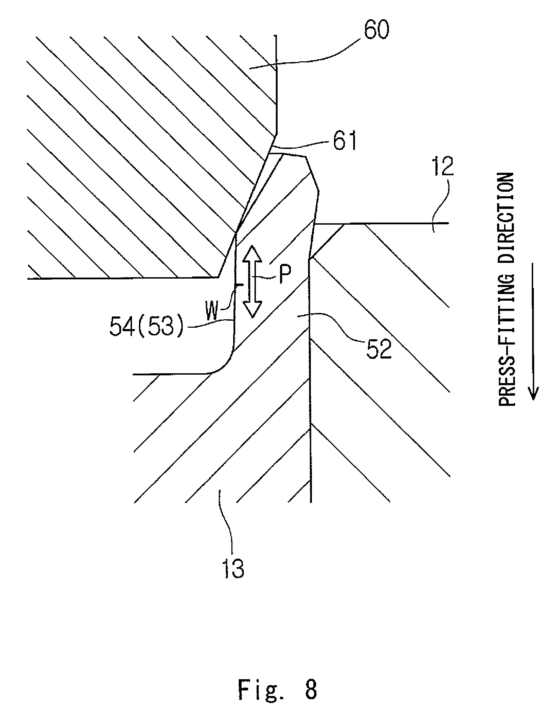

Next, using a jig 60 shown in Figs. 7 and 8, the caulk-fixing part 52 is outwardly deformed (S110 in Fig. 4). Fig. 7 shows a cross-sectional view of the jig 60. The jig 60 includes an annular inclined surface 61 that can contact the inner peripheral surface 53 of the caulk-fixing part 52. The inclined surface 61 is a surface that is inclined so as to be narrowed toward the press-fitting direction. When the jig 60 thus formed is pushed against the caulk-fixing part 52 in the press-fitting direction along the rotational axis of the differential case 13 as shown in Figs. 7 and 8, the inclined surface 61 of the jig 60 contacts the inner peripheral surface 53 of the caulk-fixing part 52 and the caulk-fixing part 52 is outwardly plastic-deformed, which prevents the ring gear 12 from dropping out from the differential case 13.

At this time, due to the outward deformation of the caulk-fixing part 52, as shown in Fig. 8, a tensile stress P that is substantially parallel to the rotational axis direction is generated in the inner peripheral surface 53 of the caulk-fixing part 52. Due to this tensile stress P, cracks W may occur in the inner peripheral surface 53. Especially, since the caulk-fixing part 52 is outwardly deformed along an annular edge between the inclined surface 36 and the press-fitting surface of the ring gear 12, and since the transition between the straight inner peripheral surface 54 and the tapered inner peripheral surface 55 is positioned offset from the above annular edge in the direction opposite to the press-fitting direction, the tensile stress P is especially generated in the straight inner peripheral surface 54. Hence, also the cracks W especially occur in the straight inner peripheral surface 54.

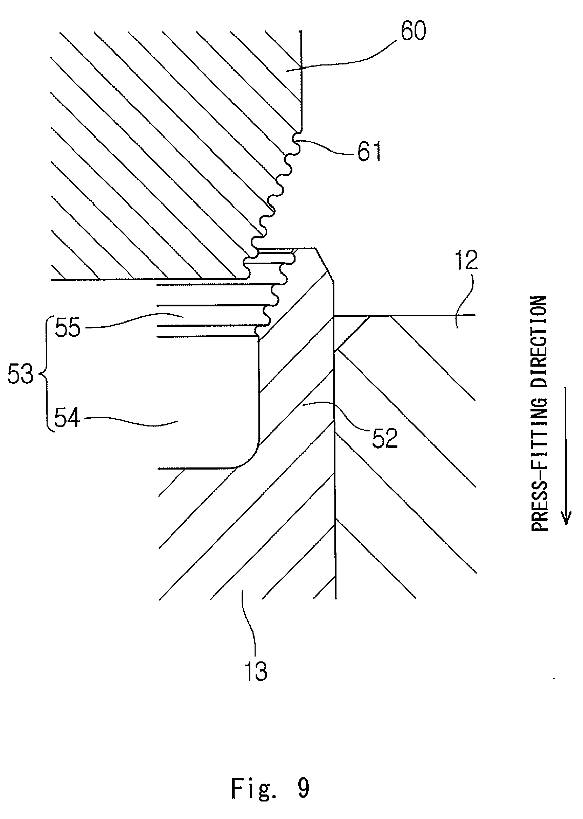

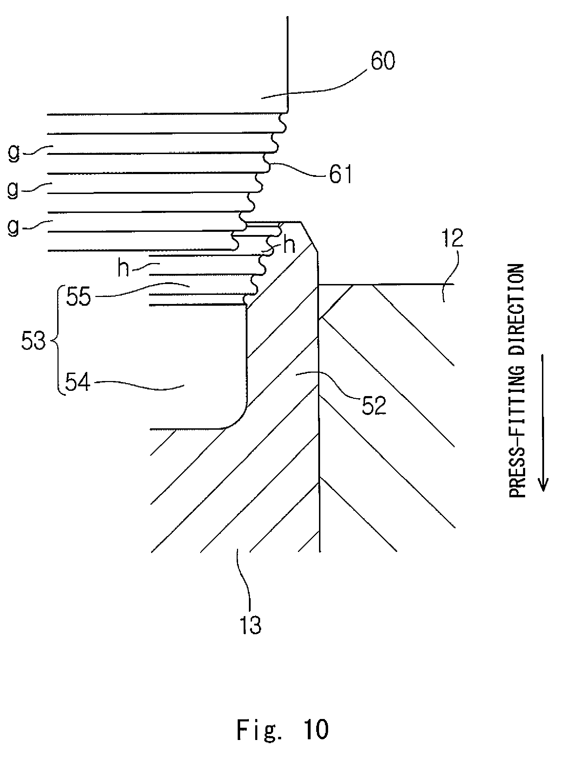

In this embodiment, as shown in Figs. 9 and 10, the inclined surface 61 of the jig 60 and the inner peripheral surface 53 of the caulk-fixing part 52, especially the tapered inner peripheral surface 55 thereof, are subjected to a surface treatment to increase the friction between the inclined surface 61 of the jig 60 and the inner peripheral surface 53 of the caulk-fixing part 52.

That is, while the inclined surface 61 of the jig 60 is typically subjected to a mirror finish, the cross-sectional shape of the inclined surface 61 of the jig 60 has an uneven shape in this embodiment. More specifically, the cross-sectional shape of the inclined surface 61 has a wave pattern. As shown in Fig. 10, a plurality of grooves g that extend annularly may be formed in the inclined surface 61.

In a similar way, the cross-sectional shape of the tapered inner peripheral surface 55 of the caulk-fixing part 52 also has an uneven shape. Specifically, the cross-sectional shape of the tapered inner peripheral surface 55 has a wave pattern. As shown in Fig. 10, a plurality of grooves h that extend annularly may be formed in the tapered inner peripheral surface 55.

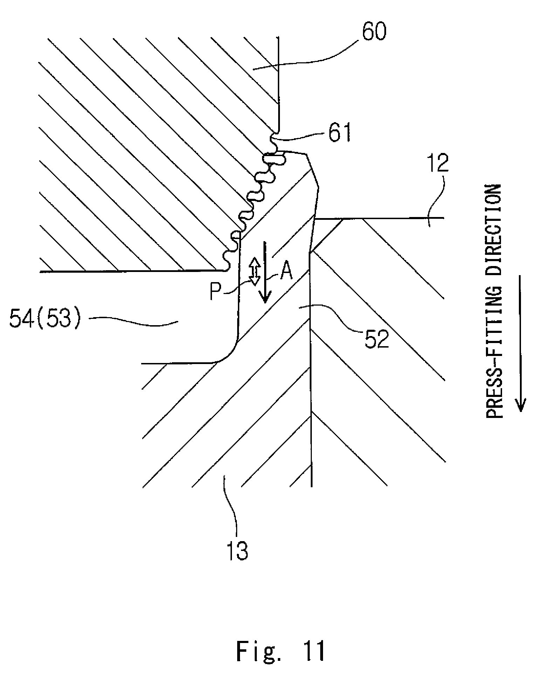

According to the above configuration, when the jig 60 is pressed in the press-fitting direction, as shown in Fig. 11, due to a strong friction between the inclined surface 61 of the jig 60 and the tapered inner peripheral surface 55 of the caulk-fixing part 52, a compressive action A is generated in the straight inner peripheral surface 54 of the caulk-fixing part 52 along the rotational axis direction. This compressive action A reduces the tensile stress P. It is therefore possible to suppress the above tensile stress P that is generated in the straight inner peripheral surface 54 of the caulk-fixing part 52 when the caulk-fixing part 52 is outwardly deformed to prevent the cracks W from occurring in the straight inner peripheral surface 54 of the caulk-fixing part 52.

While the preferred embodiment of the present invention has been described above, the above embodiment has the following characteristics.

The method for attaching the ring gear 12 to the differential case 13 includes a first step (S100) of fitting the ring gear 12 onto the outer peripheral side of the differential case 13 and a second step (S110) of outwardly deforming the caulk-fixing part 52 of the differential case 13 to prevent the ring gear 12 from dropping out from the differential case 13. In the second step (S110), the jig 60 having the inclined surface 61 that can contact the inner peripheral surface 53 of the caulk-fixing part 52 of the differential case 13 is pushed against the caulk-fixing part 52 along the rotational axis direction of the differential case 13, whereby the caulk-fixing part 52 is outwardly deformed. The inclined surface 61 of the jig 60 and the tapered inner peripheral surface 55 of the caulk-fixing part 52 are subjected to the surface treatment to increase the friction between the inclined surface 61 of the jig 60 and the tapered inner peripheral surface 55 of the caulk-fixing part 52. That is, in the above second step (S110), the tensile stress P is generated in the straight inner peripheral surface 54 of the caulk-fixing part 52 due to the outward deformation of the caulk-fixing part 52. Meanwhile, according to the above method, when the jig 60 is pushed against the caulk-fixing part 52, the compressive action A is generated in the straight inner peripheral surface 54 of the caulk-fixing part 52 due to the friction between the inclined surface 61 of the jig 60 and the tapered inner peripheral surface 55 of the caulk-fixing part 52. This compressive action A reduces the tensile stress P. It is therefore possible to suppress the above tensile stress P that is generated in the straight inner peripheral surface 54 of the caulk-fixing part 52 when the caulk-fixing part 52 is outwardly deformed, whereby it is possible to prevent cracks from occurring in the straight inner peripheral surface 54 of the caulk-fixing part 52.

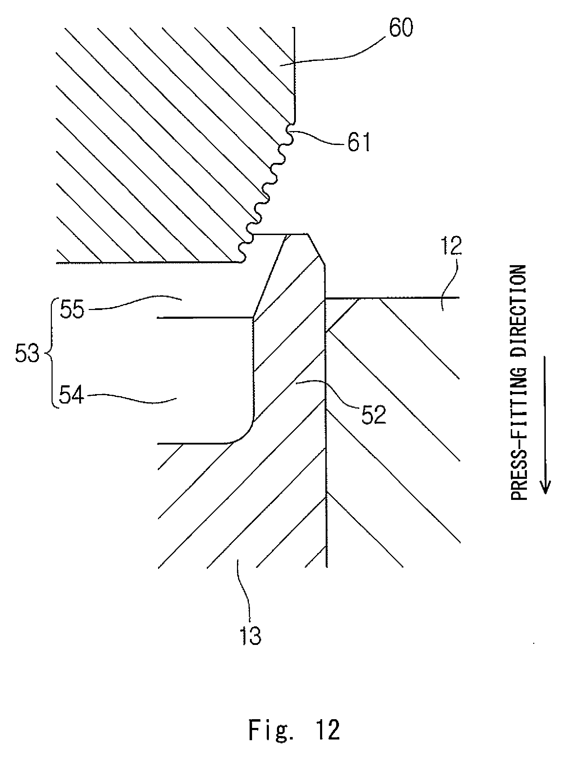

In the embodiments stated above, the inclined surface 61 of the jig 60 and the tapered inner peripheral surface 55 of the caulk-fixing part 52 are subjected to the surface treatment to increase the friction between the inclined surface 61 of the jig 60 and the tapered inner peripheral surface 55 of the caulk-fixing part 52. Alternatively, as shown in Fig. 12, for example, only one of the inclined surface 61 of the jig 60 and the tapered inner peripheral surface 55 of the caulk-fixing part 52 may be subjected to the surface treatment. In summary, it is sufficient that at least one of the inclined surface 61 of the jig 60 and the tapered inner peripheral surface 55 of the caulk-fixing part 52 be subjected to the surface treatment to increase the friction between the inclined surface 61 of the jig 60 and the tapered inner peripheral surface 55 of the caulk-fixing part 52.

Further, the expression "the ring gear 12 is fitted onto the outer peripheral side of the differential case 13" in this embodiment means that "the ring gear 12 is fitted onto the outer peripheral surface 50c of the flange 44 of the differential case 13".

As a result of the above surface treatment, the cross-sectional shapes of the inclined surface 61 of the jig 60 and the tapered inner peripheral surface 55 of the caulk-fixing part 52 become uneven.

As a result of the above surface treatment, the cross-sectional shapes of the inclined surface 61 of the jig 60 and the tapered inner peripheral surface 55 of the caulk-fixing part 52 become wave patterns.

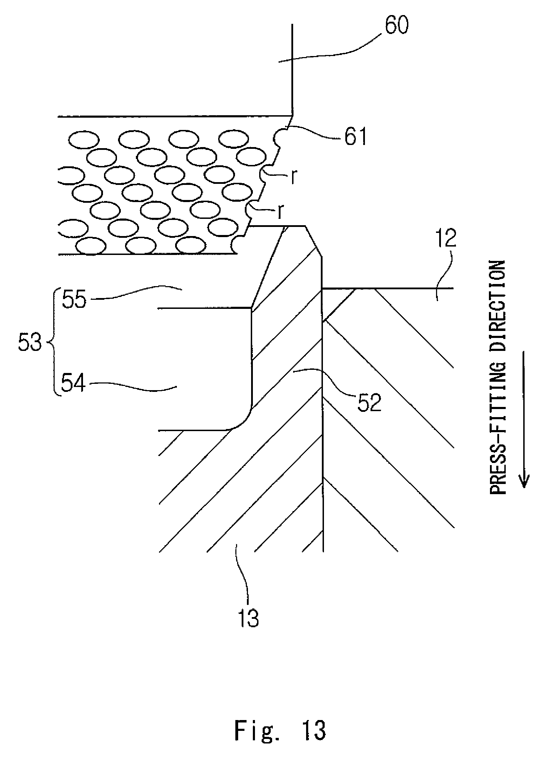

Further, as shown in Fig. 13, for example, as a result of the surface treatment, a plurality of recesses r may be formed on the inclined surface 61 of the jig 60. A similar surface treatment may be applied to the tapered inner peripheral surface 55 of the caulk-fixing part 52.

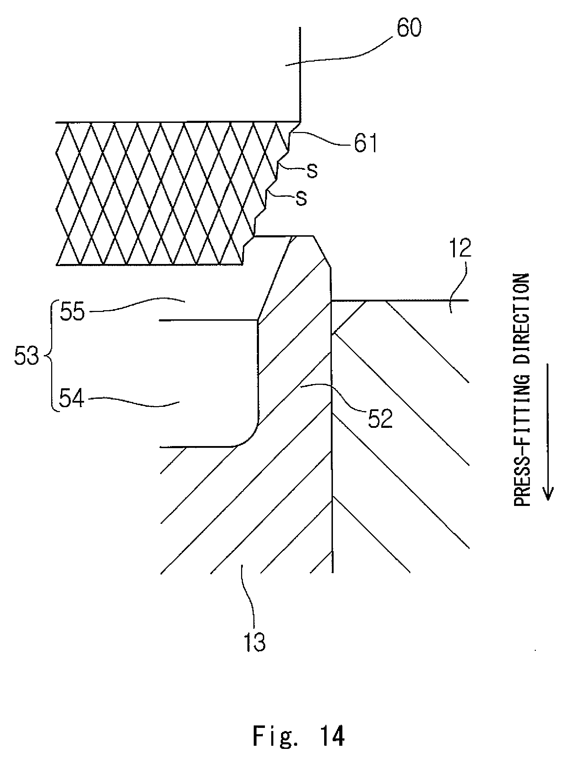

Further, as shown in Fig. 14, for example, as a result of the above surface treatment, a grid of grooves s may be formed on the inclined surface 61 of the jig 60. A similar surface treatment may be applied to the tapered inner peripheral surface 55 of the caulk-fixing part 52.

Further, when the above surface treatment is applied to the inner peripheral surface 53 of the caulk-fixing part 52, it may be applied to both the straight inner peripheral surface 54 and the tapered inner peripheral surface 55 of the inner peripheral surface 53 or it may be applied to only the tapered inner peripheral surface 55.

Further, the jig 60 used to outwardly deform the caulk-fixing part 52 of the differential case 13 in order to prevent the ring gear 12 fitted onto the outer peripheral side of the differential case 13 from dropping out from the differential case 13 includes the inclined surface 61 that can contact the inner peripheral surface 53 of the caulk-fixing part 52. The inclined surface 61 is subjected to the surface treatment to increase the friction between the inclined surface 61 and the inner peripheral surface 53 of the caulk-fixing part 52. That is, when the jig 60 is pushed in the rotational axis direction of the differential case 13, the caulk-fixing part 52 is outwardly deformed and the tensile stress P is generated in the inner peripheral surface 53 of the caulk-fixing part 52 due to the outward deformation of the caulk-fixing part 52. Meanwhile, according to the above configuration, when the jig 60 is pushed against the caulk-fixing part 52, the compressive action A is generated in the inner peripheral surface 53 of the caulk-fixing part 52 due to the friction between the inclined surface 61 of the jig 60 and the inner peripheral surface 53 of the caulk-fixing part 52. This compressive action A reduces the tensile stress P. It is therefore possible to suppress the above tensile stress P that is generated in the inner peripheral surface 53 of the caulk-fixing part 52 when the caulk-fixing part 52 is outwardly deformed, whereby it is possible to prevent cracks from occurring in the inner peripheral surface 53 of the caulk-fixing part 52.

Further, the differential case 13 whose caulk-fixing part 52 is outwardly deformed in order to prevent the ring gear 12 fitted onto the outer peripheral side of the differential case 13 from dropping out from the differential case 13 is formed as follows. The inner peripheral surface 53 of the caulk-fixing part 52 is subjected to the surface treatment to increase the friction. According to the above configuration, when the jig 60 including the inclined surface 61 that can contact the inner peripheral surface 53 of the caulk-fixing part 52 is pushed in the rotational axis direction of the differential case 13, the caulk-fixing part 52 is outwardly deformed and the tensile stress P is generated in the inner peripheral surface 53 of the caulk-fixing part 52 due to the outward deformation of the caulk-fixing part 52. Meanwhile, according to the above configuration, when the jig 60 is pushed against the caulk-fixing part 52, the compressive action A is generated in the inner peripheral surface 53 of the caulk-fixing part 52 due to the friction between the inclined surface 61 of the jig 60 and the inner peripheral surface 53 of the caulk-fixing part 52. This compressive action A reduces the tensile stress P. It is therefore possible to suppress the above tensile stress P that is generated in the inner peripheral surface 53 of the caulk-fixing part 52 when the caulk-fixing part 52 is outwardly deformed, whereby it is possible to prevent cracks from occurring in the inner peripheral surface 53 of the caulk-fixing part 52.

The above surface treatment may be, for example, shot blasting or a simple treatment for increasing the roughness of the surface with a file.

From the invention thus described, it will be obvious that the embodiments of the invention may be varied in many ways. Such variations are not to be regarded as a departure from the spirit and scope of the invention, and all such modifications as would be obvious to one skilled in the art are intended for inclusion within the scope of the following claims.

## Claims

1. A method for attaching a ring gear (12) to a differential case (13), the method comprising:
a first step (S100) of fitting the ring gear (12) onto an outer peripheral side of the differential case (13); and
a second step (S110) of outwardly deforming a caulk-fixing part (52) of the differential case (13) to prevent the ring gear (12) from dropping out from the differential case (13), wherein:
in the second step, a jig (60) having an inclined surface (61) that can contact an inner peripheral surface (53) of the caulk-fixing part (52) of the differential case (13) is pushed along a rotational axis direction of the differential case (13) to outwardly deform the caulk-fixing part (52), and
at least one of the inclined surface (61) of the jig (60) and of at least a part of the inner peripheral surface (53) of the caulk-fixing part (52) is a treated surface subjected to a surface treatment to increase a friction between the inclined surface (61) of the jig (60) and the inner peripheral surface (53) of the caulk-fixing part (52).

2. A jig (60) for outwardly deforming a caulk-fixing part (52) of a differential case (13) in order to prevent a ring gear (12) fitted onto an outer peripheral side of the differential case (13) from dropping out from the differential case (13), wherein:
the jig (60) includes an inclined surface (61) that can contact an inner peripheral surface (53) of the caulk-fixing part (52), and
the inclined surface (61) is a treated surface subjected to a surface treatment to increase a friction between the inclined surface (61) and the inner peripheral surface (53) of the caulk-fixing part (52).

3. A differential case (13) having a caulk-fixing part (52) to be outwardly deformed so as to prevent a ring gear (12) fitted onto an outer peripheral side of the differential case (13) from dropping out from the differential case (13),
wherein at least a part of an inner peripheral surface (53) of the caulk-fixing part (52) is a treated surface subjected to a surface treatment to increase a friction.

4. The differential case (13) according to claim 3, wherein the inner peripheral surface (53) of the caulk-fixing part (52) includes a straight inner peripheral part (54) and a tapered inner peripheral part (55) and at least the tapered inner peripheral part (55) is the treated surface.

5. The jig (60) according to claim 2, wherein a plurality of grooves (g) that extend annularly are formed in the treated surface of the jig (60).

6. The jig (60) according to claim 2, wherein a plurality of recesses (r) are formed in the treated surface of the jig (60).

7. The jig (60) according to claim 2, wherein a grid of grooves (s) is formed on the treated surface of the jig (60).

8. The differential case (13) according to claim 3, wherein a plurality of grooves (g) that extend annularly are formed in the treated surface of the caulk-fixing part (52) of the differential case (13).

9. The differential case (13) according to claim 3, wherein, a plurality of recesses (r) are formed in the treated surface of the caulk-fixing part (52) of the differential case (13).

10. The differential case (13) according to claim 3, wherein, a grid of grooves (s) is formed on the treated surface of the caulk-fixing part of the differential case (13).
